# EUROPÄISCHE PATENTSCHRIFT

(11) **EP 2 890 545 B1**
(45) Veröffentlichungstag und Bekanntmachung des Hinweises auf die Patenterteilung: **18.01.2017**
(21) Anmeldenummer: 13728094.7
(22) Anmeldetag: 08.03.2013
(51) Int. Cl.: B29C 65/00, B29L 31/00

(54) **VERFAHREN ZUM VERBINDEN VON UMMANTELTEN MEDIUMROHREN**
METHOD FOR CONNECTING SHEATHED MEDIUM PIPES
PROCÉDÉ D'ASSEMBLAGE DE TUYAUX DE TRANSPORT DE FLUIDES ENROBÉS

(30) Priorität: 30.08.2012 DE 102012017167
(43) Veröffentlichungstag der Anmeldung: 08.07.2015
(73) Patentinhaber: isoplus Fernwärmetechnik GmbH, 99706 Sondershausen (DE)
(72) Erfinder: HAGEDORN, Jens, 99706 Sondershausen (DE); WERSENGER, Oliver, 99713 Helbedündorf (DE)
(74) Vertreter: Hauck Patentanwaltspartnerschaft mbB
(86) Internationale Anmeldenummer: PCT/DE2013/000131
(87) Internationale Veröffentlichungsnummer: WO 2014/032636

(56) Entgegenhaltungen:
- EP-A1- 2 253 876
- EP-B1- 0 934 486
- WO-A1-00/54960
- WO-A1-01/02768
- WO-A1-2010/069044

## Beschreibung

Die vorliegende Erfindung betrifft ein Verfahren zum Verbinden von ummantelten Mediumrohren, deren Mantel eine innere Schaumschicht und eine äußere Kunststoffschicht aufweist, wobei der Mantel gegenüber dem Rand der zur verbindenden Mediumrohre axial zurückspringt, gemäß dem Oberbegriff von Patentanspruch 1.

Es ist ein Verfahren der vorstehend beschriebenen Art bekannt, bei dem mit einer Schrumpfmuffe aus unvernetztem Polyethylen gearbeitet wird. Hierbei werden zu einem gegebenen Zeitpunkt die Öffnungen (in der Regel eine Einfüllöffnung und mindestens eine Entlüftungsöffnung) in die Schrumpfmuffe gebohrt. Über diese Öffnungen wird der unter der Schrumpfmuffe befindliche Ringraum, d.h. der Ringraum zwischen Mediumrohr und Schrumpfmuffe, ausgeschäumt. Hierdurch wird eine entsprechende Wärmedämmung über der Verbindungsstelle vorgesehen. Die aufgebrachte Schrumpfmuffe wirkt dabei als Schäumschalung. Nach dem Ausschäumen werden die im Mantel der Schrumpfmuffe vorgesehenen Öffnungen mit Hilfe von geeigneten Verschlussstopfen geschlossen. Dies erfolgt beispielsweise mit Hilfe von Schlagstopfen oder durch Einschweißen von geeigneten Verschlussstopfen.

Ferner ist es bekannt, Schrumpfmuffen aus vernetztem Polyethylen zu verwenden, die in Bezug auf das Verbinden der ummantelten Mediumrohre verbesserte Materialeigenschaften aufweisen. Man war jedoch allgemein der Meinung, dass derartige Schrumpfmuffen aus vernetztem Polyethylen nicht schweißbar sind, so dass man der Auffassung war, dass das vorstehend beschriebene Verfahren, bei dem die Verschlussstopfen in die Öffnungen der Schrumpfmuffe eingeschweißt werden, nicht anwendbar ist. Die Öffnungen werden daher bei derartigen Schrumpfmuffen so geschlossen, dass Schlagstopfen eingeschlagen werden. Dieses Verfahren hat aber gewisse Nachteile, da es einerseits aufwendig ist und ein sehr genaues Arbeiten erfordert und da es andererseits mögliche Abdichtungsprobleme hervorruft.

Bei einem weiteren Verfahren geht man so vor, dass man in einer aus unvernetztem Polyethylen bestehenden, extrudierten Muffe die entsprechenden Öffnungen für das Ausschäumen (durch Bohren) anbringt und diese Bohrungen dann durch Ronden (Abdeckelemente) verschließt, um beim nachfolgenden Vernetzen des Polyethylenmateriales der Muffe die entsprechenden Bereiche der Bohrungen vor einer Vernetzung zu bewahren. Die Muffe wird dann erhitzt, aufgeweitet und abgekühlt und kann dann schließlich für ein Verfahren zum Verbinden von ummantelten Mediumrohren eingesetzt werden. Nach dem Entfernen der Ronden kann der unter der Schrumpfmuffe befindliche Ringraum ausgeschäumt werden, wonach die Öffnungen mit Hilfe von Verschlussstopfen geschlossen werden, wobei man hier die Verschlussstopfen in die Öffnungen einschweißen kann, da es sich bei dem die Öffnungen umgebenden Bereich um unvernetztes Polyethylen handelt. Dieses Verfahren ist allerdings ebenfalls aufwendig, da bereits während der Herstellung der Schrumpfmuffen die entsprechenden Öffnungen vorgesehen und mit Ronden abgedeckt werden müssen.

Aus der EP 0 934 486 B1 ist ein Verfahren mit den Merkmalen des Oberbegriffes von Patentanspruch 1 bekannt. Bei diesem bekannten Verfahren wird mit einer Schrumpfmuffe gearbeitet, die eine Außenschicht aus vernetztem Polyethylen und eine Innenschicht aus unvernetztem Polyethylen umfasst. Auch hierbei wird der unter der Schrumpfmuffe befindliche Ringraum über in der Schrumpfmuffe vorgesehene Öffnungen ausgeschäumt und werden die Öffnungen durch Einschweißen von Verschlussstopfen in die Öffnungen der Schrumpfmuffe geschlossen. Dabei wird nur in dem Bereich der Innenschicht aus unvernetztem Polyethylen eine dichte und qualitativ einwandfreie Schweißnaht erreicht, während im Bereich der Außenschicht aus vernetztem Polyethylen eine qualitativ schlechtere Schweißnaht erzeugt wird.

Der vorliegenden Erfindung liegt die Aufgabe zugrunde, ein Verfahren der eingangs beschriebenen Art zur Verfügung zu stellen, das bei einer einfachen Durchführung zu qualitativ besonders guten Rohrverbindungen führt.

Diese Aufgabe wird erfindungsgemäß bei einem Verfahren der angegebenen Art durch das kennzeichnende Merkmal von Patentanspruch 1 gelöst.

Die Erfindung setzt sich über die in der Fachwelt herrschende Meinung, dass Schrumpfmuffen aus vernetztem Polyethylen nicht schweißfähig sind, hinweg und sieht ein Verfahren vor, bei dem die Öffnungen in der Schrumpfmuffe nach dem Ausschäumen dadurch geschlossen werden, dass Verschlussstopfen eingeschweißt werden. Überraschenderweise wurde festgestellt, dass sich auch Schrumpfmuffen aus vernetztem Polyethylen durch Einschweißen von Verschlussstopfen abdichten lassen. Durch dieses Verfahren wird ein guter Abdichtungsgrad erreicht. Darüber hinaus lässt sich das Verfahren rasch und einfach durchführen, und es ist nicht erforderlich, während der Herstellung der Schrumpfmuffe spezielle Vorkehrungen zur Vorbereitung der Abdichtungsmaßnahmen zu treffen.

Die Verschlussstopfen werden bei einer Fügetemperatur eingeschweißt, die mindestens 270°C beträgt, wobei vorzugsweise mit einer Fügetemperatur von 270-273°C gearbeitet wird. Es sei hierzu angemerkt, dass die übliche Schweißtemperatur von Polyethylen bei 250°C liegt.

Vorzugsweise wird bei dem erfindungsgemäßen Verfahren eine keine Öffnung in dem Mantel aufweisende Schrumpfmuffe auf ein ummanteltes Mediumrohr geschoben. Hierbei werden die Öffnungen durch entsprechende Bohrungen vorzugsweise nach dem Aufschrumpfen der Schrumpfmuffe auf die beiden zu verbindenden ummantelten Mediumrohre hergestellt. Das erfindungsgemäße Verfahren schließt aber nicht aus, dass die Öffnungen auch schon vorher in der Schrumpfmuffe vorgesehen werden, beispielsweise nach dem Herstellen der Muffen. In jedem Falle ist eine Abdeckung der Bohrungen nicht erforderlich.

Auch beim dem erfindungsgemäßen Verfahren werden mindestens zwei Öffnungen vorgesehen, wobei in der Regel eine Öffnung als Einfüllöffnung für die Schaummasse dient. Ein oder mehrere weitere Öffnungen finden als Entlüftungsöffnungen Verwendung.

Bei dem erfindungsgemäßen Verfahren werden die Verschlussstopfen vorzugsweise auch mit einer längeren Vorwärmzeit der Verschlussstopfen und der Schrumpfmuffe eingeschweißt als der üblichen Vorwärmzeit von Schrumpfmuffen aus unvernetztem Polyethylen.

Vorzugsweise wird bei dem erfindungsgemäßen Verfahren mit einer Vorwärmzeit gearbeitet, die ca. 15 sec länger ist als die übliche Vorwärmzeit von Schrumpfmuffen aus unvernetztem Polyethylen. Es wird dabei davon ausgegangen, dass die Vorwärmzeit bzw. Aufheizzeit von Muffen aus unvernetztem Polyethylen etwa 30 sec beträgt, während erfindungsgemäß etwa 45 sec zur Anwendung kommen.

Vorzugsweise werden Verschlussstopfen aus unvernetztem Polyethylen eingeschweißt. Hierdurch ergeben sich gute Schweißbedingungen.

Erfindungsgemäß findet als Material der Schrumpfmuffe vernetztes Polyethylen Verwendung, wobei in der Regel davon auszugehen ist, dass hierbei 50-60% des Polyethylens vernetzt sind, während 40-50% unvernetzt bleiben. Bei dem erfindungsgemäßen Verfahren wird davon ausgegangen, dass durch diesen Anteil an unvernetztem Material das erfindungsgemäße Einschweißen der Verschlussstopfen möglich gemacht wird, insbesondere mit Verschlussstopfen, die zu 100% aus unvernetztem Polyethylen bestehen.

Das erfindungsgemäße Verfahren wird vorzugsweise mit einem Stopfenschweißgerät durchgeführt. Derartige Geräte sind bekannt und brauchen hier nicht im Einzelnen beschrieben zu werden.

Vorzugsweise werden die Öffnungen nach dem Ausschäumen aufgebohrt, wobei hierzu ein Kegelbohrer mit Anschlag verwendet werden kann. Auf diese Weise wird sichergestellt, dass für das Einschweißen der Verschlussstopfen Öffnungen mit freiem Querschnitt zur Verfügung stehen, die sich nicht durch das Ausschäumen zugesetzt haben.

Wichtig ist, dass die Verschlussstopfen und die Öffnungen gleichzeitig angewärmt werden (vorgeheizt werden), damit beide Oberflächen in einen plastischen Zustand gelangen, um zusammengefügt werden zu können. Die Verschlussstopfen werden dann in die Öffnungen bzw. Bohrungen eingedrückt und über eine entsprechende Zeitspanne unter Druck gehalten, vorzugsweise mindestens 45 sec, um das Einschweißen durchzuführen.

Die Erfindung wird nachfolgend anhand eines Ausführungsbeispiels in Verbindung mit der Zeichnung im Einzelnen erläutert. Es zeigen:
- Figur 1: eine räumliche Ansicht einer auf die Verbindungsstelle zwischen zwei ummantelten Mediumrohren aufgeschrumpften Muffe, wobei die Öffnungen der Muffe noch nicht mit Verschlussstopfen geschlossen sind;
- Figur 2: eine vergrößerte Detailansicht des Aufbohrens einer Einfüllöffnung der Muffe mit Hilfe eines Kegelbohrers mit Anschlag; und
- Figur 3: eine vergrößerte Detailansicht entsprechend Figur 2 nach dem Einschweißen eines Verschlussstopfens in die Einfüllöffnung der Muffe.

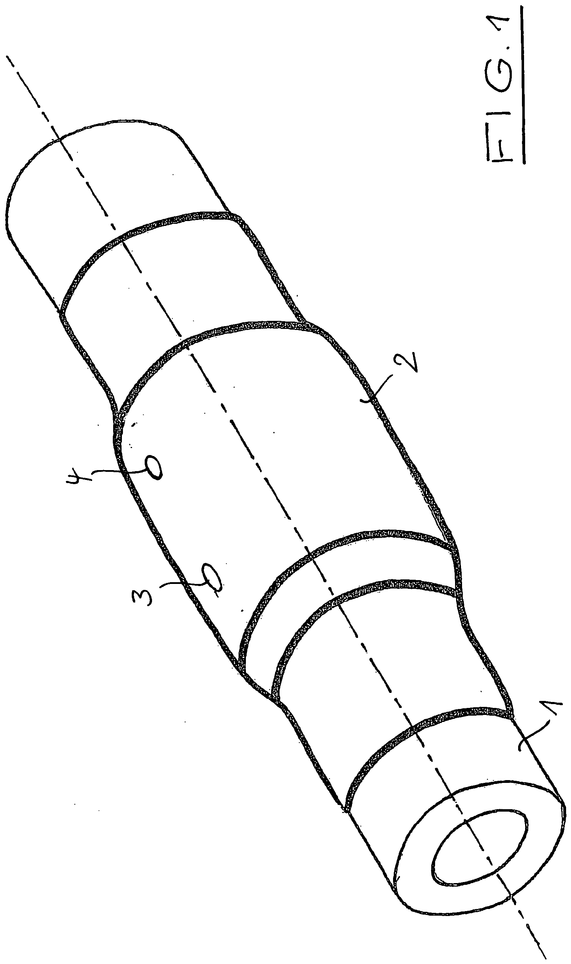

Figur 1 zeigt zwei ummantelte Mediumrohre 1, die miteinander verbunden werden sollen. Diese ummantelten Mediumrohre weisen ein inneres Mediumrohr, beispielsweise aus Stahl, auf sowie einen das Mediumrohr umgebenden Mantel, der eine innere Schaumschicht und eine äußere Kunststoffschicht besitzt. An der Verbindungsstelle springt der Mantel gegenüber den Rand der zu verbindenden Mediumrohre axial zurück, wobei der hierdurch gebildete Ringraum ausgeschäumt und mit einer Kunststoffmuffe geschlossen werden soll. Bei der Kunststoffmuffe handelt es sich um eine Schrumpfmuffe 2 aus vernetztem Polyethylen (PEx), die vor dem Verbinden auf eines der zur verbindenden Rohre geschoben und nach dem Verbinden der Mediumrohre (durch Schweißen) auf der Verbindungsstelle platziert wird. Die Muffe 2 wird dann beidseitig auf die zu verbindenden Rohre aufgeschrumpft, wie in Figur 1 gezeigt. Danach werden, um den unter dem mittleren Bereich der aufgeschrumpften Muffe befindlichen Ringraum ausschäumen zu können, zwei Öffnungen in den Mantel der Muffe 2 gebohrt, nämlich eine Einfüllöffnung 3 und eine Entlüftungsöffnung 4. Durch Einführen der Schaummasse über die Einfüllöffnung 3 wird der Ringraum ausgeschäumt und abbinden gelassen. Ein hierzu verwendeter Polyurethan-Schaum bindet in ca. 30 Min. ab.

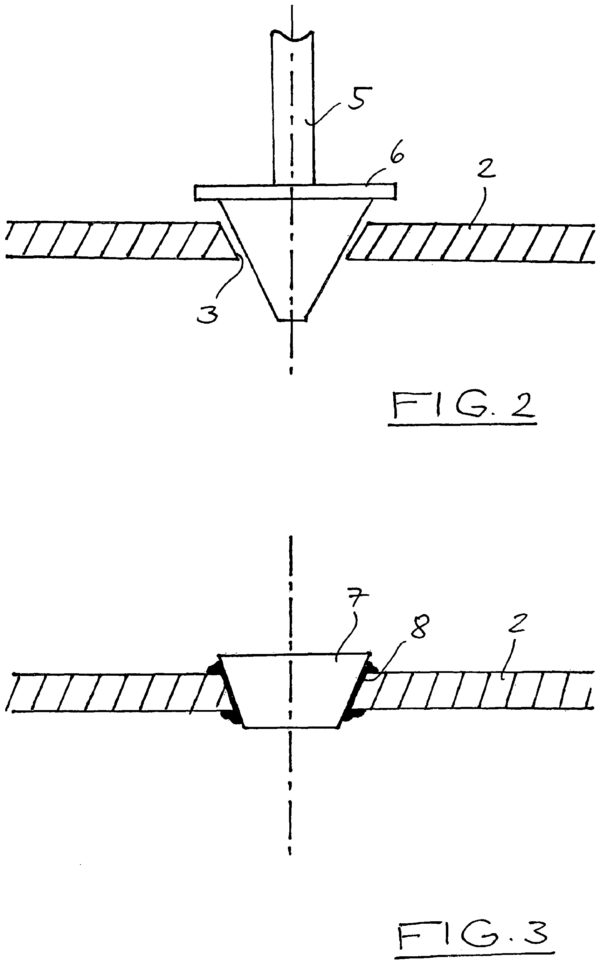

Danach werden die Einfüllöffnungen 3 und Entlüftungsöffnung 4 mit Hilfe eines Kegelbohrers 5 mit Anschlag 6 aufgebohrt, um die Öffnungen 3, 4 von möglichen Schaumresten zu befreien. Dies ist in Figur 2 schematisch dargestellt.

Die beiden Öffnungen 3, 4 werden danach durch das Einschweißen von Verschlussstopfen geschlossen, wie in Figur 3 gezeigt. Dies geschieht mit Hilfe eines Stopfenschweißgerätes (nicht gezeigt), das den Verschlussstopfen 7 sowie den Umgebungsbereich der Öffnungen 3, 4 auf eine Fügetemperatur von etwa 270°C bringt. Die entsprechende Vorheizzeit bzw. Anwärmzeit des Verschlussstopfens und der die Öffnungen umgebenden Bereiche beträgt etwa 45 sec. Hierdurch werden beide Oberflächen (die des Verschlussstopfens und die der Öffnungen) plastifiziert, um zusammengefügt werden zu können. Der Schweißstopfen 7 wird dann in die Öffnungen 3, 4 eingedrückt und mindestens 45 sec unter Druck gehalten. Der entsprechende Zustand ist in Figur 3 dargestellt, wobei mit 8 die entsprechende Schweißnaht gekennzeichnet ist.

Das Besondere an diesem Verfahren besteht darin, dass.es gelingt, eine Muffe aus vernetztem Polyethylen zu schweißen. Dies ist bei üblichen Schweißtemperaturen (ca. 250°C) nicht möglich. Durch Erhöhung der Schweißtemperatur auf mindestens 270°C und verlängerte Vorheiz- bzw. Anwärmzeiten gelingt es, die Verschlussstopfen in die Bohrungen einzuschweißen.

## Patentansprüche

1. Verfahren zum Verbinden von ummantelten Mediumrohren, deren Mantel eine innere Schaumschicht und eine äußere Kunststoffschicht aufweist, wobei der Mantel gegenüber dem Rand der zu verbindenden Mediumrohre axial zurückspringt, mit den folgenden Schritten:
Aufschieben einer Schrumpfmuffe aus vernetztem Polyethylen auf ein ummanteltes Mediumrohr vor dem Verbinden der Mediumrohre,
Verbinden der Mediumrohre,
Schieben der Schrumpfmuffe auf die Verbindungsstelle und Aufschrumpfen derselben auf die beiden ummantelten Mediumrohre,
Ausschäumen des unter der Schrumpfmuffe befindlichen Ringraumes über in der Schrumpfmuffe vorgesehene Öffnungen und
Schließen der Öffnungen mit Hilfe von Verschlussstopfen, wobei
die Öffnungen durch Einschweißen der Verschlussstopfen in die Öffnungen der Schrumpfmuffe geschlossen werden,
**dadurch gekennzeichnet, dass** die Verschlussstopfen bei einer Fügetemperatur eingeschweißt werden, die mindestens 270°C beträgt.

2. Verfahren nach Anspruch 1, **dadurch gekennzeichnet, dass** eine keine Öffnung im Mantel aufweisende Schrumpfmuffe auf ein ummanteltes Mediumrohr geschoben wird.

3. Verfahren nach Anspruch 1 oder 2, **dadurch gekennzeichnet, dass** die Öffnungen in die Schrumpfmuffe gebohrt werden, nachdem diese auf die beiden verbundenen ummantelten Mediumrohre aufgeschrumpft worden ist.

4. Verfahren nach einem der vorangehenden Ansprüche, **dadurch gekennzeichnet, dass** die Verschlussstopfen mit einer längeren Vorwärmzeit der Verschlussstopfen und der Schrumpfmuffe eingeschweißt werden als der üblichen Vorwärmzeit von Schrumpfmuffen aus unvernetztem Polyethylen.

5. Verfahren nach einem der vorangehenden Ansprüche, **dadurch gekennzeichnet, dass** mit einer Fügetemperatur von 270-273°C gearbeitet wird.

6. Verfahren nach einem der Ansprüche 4 oder 5, **dadurch gekennzeichnet, dass** mit einer Vorwärmzeit gearbeitet wird, die etwa 15 sec länger ist als die übliche Vorwärmzeit von Schrumpfmuffen aus unvernetztem Polyethylen.

7. Verfahren nach einem der vorangehenden Ansprüche, **dadurch gekennzeichnet, dass** es mit einem Stopfenschweißgerät durchgeführt wird.

8. Verfahren nach einem der vorangehenden Ansprüche, **dadurch gekennzeichnet, dass** Verschlussstopfen aus unvernetztem Polyethylen eingeschweißt werden.

9. Verfahren nach einem der vorangehenden Ansprüche, **dadurch gekennzeichnet, dass** die Öffnungen nach dem Ausschäumen aufgebohrt werden.

## Claims

1. A method for connecting sheathed medium pipes the sheath of which including an inner foam layer and an outer plastic layer, wherein the sheath recedes axially with respect to the edge of the medium pipes which are to be connected, the method comprising the following steps:
Pushing a shrinking sleeve of cross-linked polyethylene onto a sheathed medium pipe prior to the connection of the medium pipes,
connecting the medium pipes,
pushing the shrinking sleeve onto the connection place and shrinking the same onto the two sheathed medium pipes,
foaming the annular space located beneath the shrinking sleeve through apertures provided in the shrinking sleeve and
closing the apertures with the aid of closure plugs wherein
the apertures are closed by welding the closure plugs into the apertures of the shrinking sleeve, **characterized in that** the closure plugs are welded at a joining temperature of at least 270°C.

2. The method according to claim 1, **characterized in that** a shrinking sleeve having no aperture in the sheath is pushed onto a sheathed medium pipe.

3. The method according to claim 1 or 2, **characterized in that** the apertures are bored into the shrinking sleeve after the same has been shrunk onto the two connected sheathed medium pipes.

4. The method according to one of the preceding claims, **characterized in that** the closure plugs are welded with a longer pre-heating time of the closure plug and the shrinking sleeve as the customary pre-heating time of shrinking sleeves consisting of non-cross-linked polyethylene.

5. The method according to one of the preceding claims, **characterized in that** it is operated with a joining temperature of 270 - 273°C.

6. The method according to one of the claims 4 or 5, **characterized in that** it is operated with a pre-heating time which is approximately 15 sec longer than the customary pre-heating time of shrinking sleeves consisting of non-cross-linked polyethylene.

7. The method according to one of the preceding claims, **characterized in that** it is carried out with a plug welding device.

8. The method according to one of the preceding claims, **characterized in that** closure plugs consisting of non-cross-linked polyethylene are welded.

9. The method according to one of the preceding claims, **characterized in that** the apertures are opened by boring after the foaming.

## Revendications

1. Procédé d'assemblage de tuyaux de fluide enrobés, dont l'enrobage comporte une couche de mousse interne et une couche de plastique externe, l'enrobage étant en retrait de façon axiale par rapport au bord des tuyaux de fluide à assembler, avec les étapes suivantes :
- enfiler un manchon rétractable en polyéthylène réticulé sur un tube de fluide enrobé avant l'assemblage des tubes de fluide,
- assembler les tubes de fluide,
- glisser le manchon rétractable sur le point d'assemblage et le fretter sur les deux tuyaux de fluide enrobés,
- garnir de mousse l'espace annulaire se trouvant sous le manchon rétractable par l'intermédiaire d'orifices prévus dans le manchon rétractable et
- fermer les orifices à l'aide de bouchons de fermeture,
les orifices étant fermés en soudant les bouchons de fermeture dans les orifices du manchon rétractable,
**caractérisé en ce que** les bouchons de fermeture sont soudés à une température d'assemblage qui vaut au moins 270 °C.

2. Procédé selon la revendication 1, **caractérisé en ce qu'**un manchon rétractable ne comportant aucun orifice dans l'enrobage est glissé sur un tuyau de fluide enrobé.

3. Procédé selon la revendication 1 ou 2, **caractérisé en ce que** les orifices sont percés dans le manchon de rétractable après que celui-ci a été fretté sur les deux tuyaux de fluide enrobés assemblés.

4. Procédé selon l'une des revendications précédentes, **caractérisé en ce que** les bouchons de fermeture sont soudés avec un temps de préchauffage des bouchons de fermeture et du manchon rétractable plus long que le temps de préchauffage usuel de manchons rétractables en polyéthylène non réticulé.

5. Procédé selon l'une des revendications précédentes, **caractérisé en ce que** l'on travaille à une température d'assemblage de 270 à 273 °C.

6. Procédé selon l'une des revendications 4 ou 5, **caractérisé en ce que** l'on travaille avec un temps de préchauffage qui est environ 15 secondes plus long que le temps de préchauffage usuel de manchons rétractables en polyéthylène non réticulé.

7. Procédé selon l'une des revendications précédentes, **caractérisé en ce qu'**il s'effectue avec un appareil de soudage de bouchon.

8. Procédé selon l'une des revendications précédentes, **caractérisé en ce que** l'on soude des bouchons de fermeture en polyéthylène non réticulé.

9. Procédé selon l'une des revendications précédentes, **caractérisé en ce que** les orifices sont percés après le moussage.
